# EUROPEAN PATENT APPLICATION

(11) **EP 4 421 699 A1**
(43) Date of publication of application: **28.08.2024**
(21) Application number: 23195608.7
(22) Date of filing: 06.09.2023
(51) Int. Cl.: G06Q 10/06

(54) **EXTENSIBLE STATE BASED WORKFLOWS**

(30) Priority: 27.02.2023 US 202318114884
(71) Applicant: Tracelink, Inc., Wilmington, MA 01887 (US)
(72) Inventor: Sturim, Robert, Wenham, MA, 01984 (US); Dahod, Shabbir, Andover, MA, 01810 (US)
(74) Representative: Bringer IP

(57) **Abstract**

An extensible state-based workflow management method includes defining a base workflow for a single business object type that includes multiple different event handlers and that specifies an initial state, a final state and one or more intermediate states. Each of the event handlers respond to a canonicalized form of an input document with a canonicalized form of an output document. The method additionally includes augmenting the base workflow into multiple different extended workflows, with each augmentation extending the base workflow differently for different instances of a business object of a single business object type that concurrently execute in a common host computing platform, each extended workflow incorporating an expansion of one of the intermediate states into a sequence of sub-states. Finally, the method includes executing each of the extended workflows concurrently in association with a corresponding one of the instances within the common host computing platform.

## Description

### BACKGROUND OF THE INVENTION

### Field of the Invention

The present invention relates to the technical field of document workflow management and more particular to the ad hoc specification of a document workflow in a workflow management computing system.

### Description of the Related Art

Document workflow management refers to a computing system adapted to generate, track, revise, approve, capture, retrieve, retain, and destroy documents that are linked to particular business processes. Generally, a document can vary from a data holding artifact such as a business object to a more traditional structured collection of data manipulable in a specialized document viewer. In a document workflow management system, the lifecycle of a document is defined according to a sequence of states such that the document does not change state unless a particular condition or set of conditions are met. The sequence can be linear in nature, or the sequence can branch on one or more occasions. For each transition from one state to another, business logic may be invoked prior to the transition, or following the transition upon arrival at a new state. Ultimately, the workflow of a document can converge on a single final state, or one or more separate and distinct final states.

In many instances, the sequence of states for a workflow is internally established by the application developer at the time of developing the workflow management system. However, in other cases, the workflow for a document can be defined by the end user through a user interface to the workflow management system. Indeed, in the latter circumstance, a reference workflow can be provided at the time of deployment of the workflow management system which can then by modified by the end user to reflect the specific needs of the end user.

The nature of the workflow management system lends itself to a hosted architecture in which the logic and data of an instance of the system reside in a remote container accessible by different end users from over a data communications network. Each deployment, though, requires its own container so that each instance of the system once deployed into a corresponding container can then be customized with a workflow variation best suited for the end user. As well, it will be recognized that each deployment requires its own set of computing resources even though a large proportion of the program logic of the application remains identical for each deployment representing an inefficient use of computing resources. However, to engage in hoteling of a deployment with separable data repositories for each customer, as is known in the art, while providing an efficient use of computing resources, does not permit the customized modification of a workflow to suit the needs of one of the end users because such modification may not suit the needs of others of the end users.

### BRIEF SUMMARY OF THE INVENTION

Embodiments of the present invention address technical deficiencies of the art in respect to workflow extensibility. To that end, embodiments of the present invention provide for a novel and non-obvious method for extensible state-based workflow management. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, an extensible state-based workflow management method includes defining a base workflow for a single business object type of a defined business object for which instances of the business object encapsulate application data for an application, the base workflow including multiple different event handlers, and specifying an initial state, a final state and one or more intermediate states. Each of the event handlers responds to a canonicalized form of an input document with a canonicalized form of an output document. The base workflow is then augmented into multiple different extended workflows, with each augmentation extending the base workflow differently for different instances of the business object of the single business object type, and with different instances of the business object concurrently executing in a common host computing platform, such that each extended workflow incorporates an expansion of one of the intermediate states into a sequence of sub-states. Finally, the method includes executing each of the extended workflows concurrently in association with a corresponding one of the instances within the common host computing platform.

In one aspect of the embodiment, a change from one of the sub-states to another of the sub-states is determined in response to a directive to persist an existing form of the corresponding one of the instances of one of the instances of the business object of the single business object type with a proposed form of the corresponding one of the instances of the single business object of the single business object type, and a detection of a difference between the existing form and the proposed form. More specifically, a controller in a data access layer of the common host computing platform receives the directive and in response performs a comparison of the existing form and the proposed form in order to detect the difference.

In another aspect of the embodiment, at one of the intermediate states in transition to another of the intermediate states, associated logic executes upon completing the transition. In yet another aspect of the embodiment, associated logic published data to a data layer upon arriving at a new one of the intermediate states. In yet another aspect of the at a transition between a previous and a next one of the intermediate states, associated logic executes.

In another embodiment of the invention, a data processing system is adapted for extensible state-based workflow management. The system includes a host computing platform having one or more computers, each with memory and one or processing units including one or more processing cores. The system also includes a workflow extensibility management module. The module in turn has computer program instructions that are enabled while executing in the memory of at least one of the processing units of the host computing platform to define a base workflow for a single business object type of a corresponding defined business object, the base workflow including a multiplicity of event handlers, each responding to a canonicalized form of an input document with a canonicalized form of an output document.

The program instructions additionally are enabled to augment the base workflow into multiple different extended workflows, each augmentation extending the base workflow differently for different instances of the defined business object of the single business object type, with the instances concurrently executing in a common host computing platform, and with each extended workflow incorporating an expansion of one of the intermediate states into a sequence of sub-states. Finally, the program instructions are enabled to execute each of the extended workflows concurrently in association with a corresponding one of the instances of one of the defined business object of the single business object type within the common host computing platform.

In this way, the technical deficiencies of extending workflows in a remotely hosted workflow management system are overcome owing to the augmentation of the base workflow into multiple different extended workflows, with each augmentation extending the base workflow differently for different versions of the single business object, while the versions concurrently execute in the common host computing platform. More particularly, in so far as the core workflow remains identical for all versions of the business object, but each extended workflow incorporates an expansion of one of the intermediate states into a sequence of sub-states, the different versions of the same base workflow can readily co-exist in the common host computing platform.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration reflecting different aspects of a process of extensible state-based workflow management;
Figure 2 is a block diagram depicting a data processing system adapted to perform one of the aspects of the process of Figure 1; and,
Figure 3 is a flow chart illustrating one of the aspects of the process of Figure 1.

### DETAILED DESCRIPTION OF THE INVENTION

Embodiments of the invention provide for extensible state-based workflow management. In accordance with an embodiment of the invention, a base workflow for a business object type defining a data structure storing data for an application is extended differently for different concurrent users of a corresponding instance of an application executing in a common host computing platform. Each base workflow can be defined for correspondingly different business object type and each base workflow subsequently can be extended according to the requirements of the end user. In this regard, for each different extension of the base workflow for a corresponding one of the concurrent users, an intermediate state is augmented with one or more sub-states. Then, during execution, upon submitting an instance of the business object (such as a document) for update in connection with a particular one of the users, a transition from one state to the next may occur in accordance with the extended form of the base workflow established for the particular one of the users. In this way, the structure of a base workflow can vary for different end users executing different instances of the same business object within the same computing container.

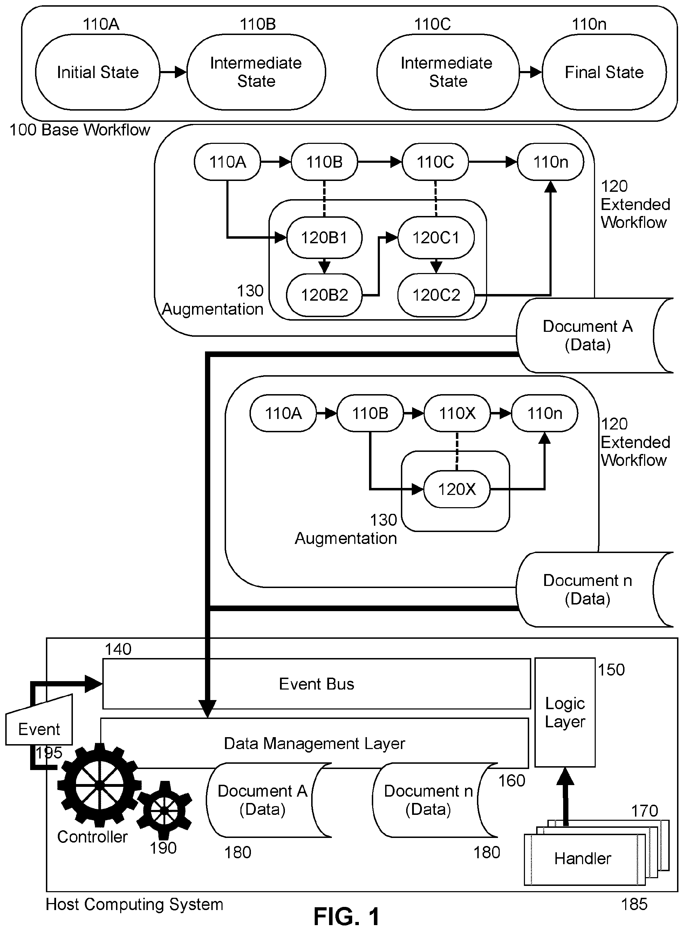

In illustration of one aspect of the embodiment, Figure 1 pictorially shows a process of extensible state-based workflow management. As shown in Figure 1, A base workflow 100 is defined for a corresponding business object type including one or more different event handlers 170 for which execution occurs within a logic layer 150 of a host computing platform 185 responsive to events 195 received on an event bus 140 of the host computing platform and mapped by a controller 190 to the executing ones of the event handlers 170. The base workflow 100 is defined to include an initial state 110A, a final state 110n and one or more intermediate states 100B, 100C, 110X disposed there between.

For different instances of a business object of the business object type in the form of respective documents passed into the data management layer 160 of the host computing system 185, an extension 120 to the base workflow 100 is defined to include an augmentation 130 thereof initiating an extended series of one or more sub-states 120B1, 120B2, 120C1, 120C2, 120X for one or more of the intermediate states 110B, 110C, 110X, so that each of the sub-states 120B1, 120B2, 120C1, 120C2, 120X extends one of the corresponding intermediate states 110B, 110C, 110X and executes in addition to the corresponding one of the intermediate states 110B, 110C, 110X. As each of the documents is provided as an update to the data management layer 160, the controller 190 compares the provided one of the documents to an existing one of the documents in order to detect a change. Should the controller 190 detect a change, a state change is presumed to have occurred in the extended workflow 120 of the existing one of the documents.

As such, one or more of the event handlers 170 associated either with a transition from one of the sub-states 120B1, 120B2, 120C1, 120C2, 120X a transition to a next one of the sub-states 120B 1, 120B2, 120C1, 120C2, 120X, or an arrival at the next one of the sub-states 120B1, 120B2, 120C1, 120C2, 120X, executes in the logic layer 150 of the host computing system. In this way, for each different one of the documents provided to the common data management layer 160 of the host computing system, a varying logical outcome by the single logic layer 150 can be supported even though all of the documents share the same base workflow 100 and differ only by the augmentation 130 of the extended workflow 120.

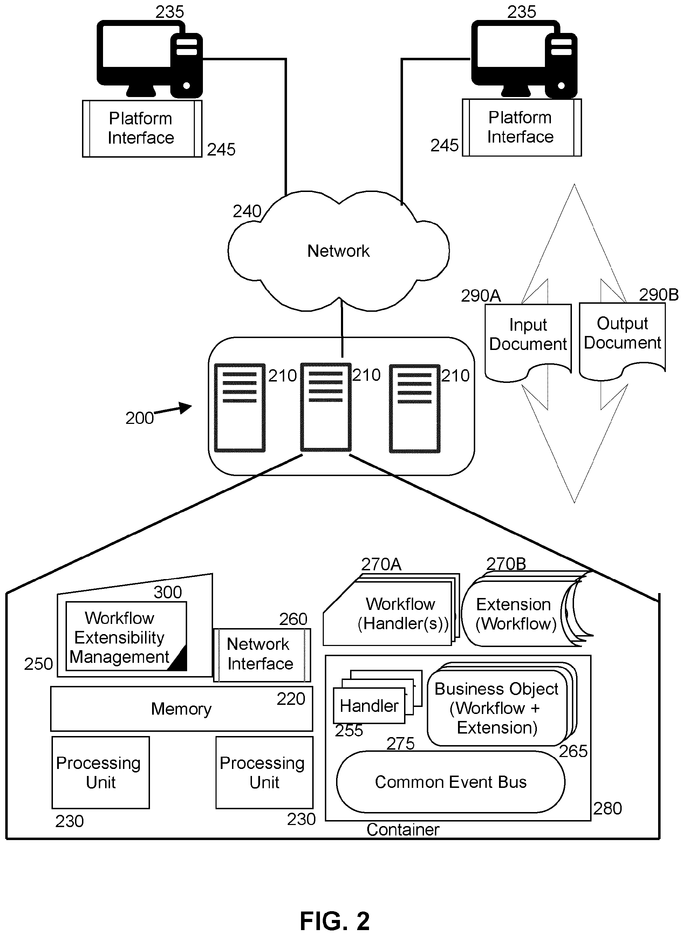

Aspects of the process described in connection with Figure 1 can be implemented within a data processing system. In further illustration, Figure 2 schematically shows a data processing system adapted to perform extensible state-based workflow management. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus, or the computers can be remotely disposed from one another and in communication with one another through network interface 260 over a data communications network 240.

A sandboxed process address space providing a logical execution environment in the form of a container 280 is defined within the memory 220 and hosts the management of a common event bus 265 onto which events are posted by business object instances 265 and which events are processed by different assigned event handlers 255 executing by the processing units 230 of the host computing platform 200. Each of the business object instances 265 has associated therewith, a base workflow 270A of different states for which transitions therefrom, transitions there between and transitions thereto, individually can trigger corresponding one of the event handlers 255. In this regard, ones of the event handlers 255 can be triggered upon selecting a transition to a designated one of the different states so as to determine whether or not the transition is permitted before assenting to the transition. As well, ones of the events handlers 255 can be triggered after a transition and upon arriving at a designated one of the different states.

Of import, selected ones of the business object instances 265 also include extensions 270B to the base workflow 270A providing for a series of sub-states leading from one intermediate state of the base workflow 270A and terminating at the same or a different one of the intermediate states of the base workflow 270A. To that end, as a transition occurs from a current base state to next base state, so too does a transition from a last one of the substates of the current base state to a first one of the substates of the next base state.

Notably, a computing device 250 including a non-transitory computer readable storage medium can be included with the data processing system 200 and accessed by the processing units 230 of one or more of the computers 210. The computing device stores 250 thereon or retains therein a program module 300 that includes computer program instructions which when executed by one or more of the processing units 230, performs a programmatically executable process for extensible state-based workflow management. Specifically, the program instructions during execution receive from over the data communications network 240 from a remote computing client 235 by way of a platform interface 245, a canonicalized form of an input document 290A reflective of one of the business object instances 265.

Upon receipt of the input document 290A, the program instructions compare the input document 290A with a stored form of the one of the business object instances 265. To the extent that a difference is detected between the input document 290A and the stored form of the one of the business object instances 265, a state change is determined to have occurred and one or more of the event handlers 255 associated with the change in state executes by the processing units 230 so as to produce an output document 290B. The output document 290B then replaces the stored form of the one of the business object instances 265 and the output document 290B is returned to the remote computing client 235 from over the data communications network 240.

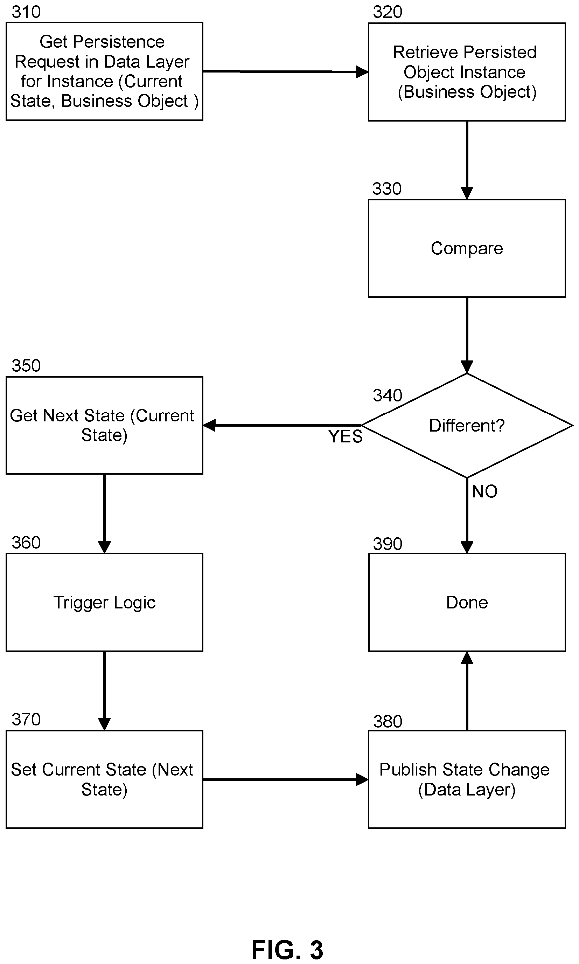

In further illustration of an exemplary operation of the module, Figure 3 is a flow chart illustrating one of the aspects of the process of Figure 1. Beginning in block 305, a persistence request is received in the data layer of an enterprise application hosted within a single container and supporting multiple different instances of the enterprise application within the single container for multiple different end users. The persistence request includes a canonical form of a document reflective of a business object instance of a business object of particular type having associated therewith, a base workflow and an augmentation of the base workflow extending from an intermediate state of the base workflow. In block 320, a persisted counterpart to the document is retrieved from the data layer and a comparison is performed to identify changes to the documents in block 330.

In decision block 340, it is determined if one or more changes are detected between the documents. If not, the process ends in block 390. On the other hand, if it is determined that one or more changes are detected between the documents, in block 350 a next state resulting from a state change from a current state of the augmentation is selected and in block 360, logic in the form of an event handler is triggered for execution in a logic layer of the enterprise application in the container that had been associated either with a transition between the current state and the next state, or that had been associated with an arrival at the next state in the augmentation.

Importantly, the event handler of a current state in the base workflow can include logic determining whether or not a designated transition to a next state is permitted. That is to say, the event handler can determine whether or not the designated transition is defined, whether or not the transition if defined is expressly permitted such as whether or not the transition is between two base states, two sub-states of the same base state or prohibited otherwise. The transition logic can be triggered either synchronously or asynchronously. Synchronous triggering results from the express invocation of the event handler whereas asynchronous triggering results from one process publishing events on a message queue that is subsequently read by a different process triggering the event handler.
Thus, to the extent that the transition logic of the event handler determines that the transition is not permitted owing to the current state, the next state or the relationship therebetween, the logic of the event handler rejects the transition. Importantly, the transition logic of the event handler denies a transition when either or both of the current state and an associated sub-state cannot satisfy the logic of the event handler. However, so long as both the current state and any associated sub-state both satisfy the transition logic of the event handler, the current state for the augmentation is then set as the next state in block 370. Optionally, in block 380 the occurrence of the state change is published as an event to the event bus of the enterprise application so as to permit another event handler to act upon the knowledge of the state change. Finally, the process ends in block 390.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

**1.** An extensible state-based workflow management method comprising:
defining a base workflow for a single business object type, the base workflow comprising a multiplicity of event handlers, each of the event handlers responding to a canonicalized form of an input document with a canonicalized form of an output document, the base workflow specifying an initial state, a final state and one or more intermediate states;
augmenting the base workflow into multiple different extended workflows, each augmentation extending the base workflow differently for different instances of a business object of the single business object type, the different instances concurrently executing in a common host computing platform, each extended workflow incorporating an expansion of one of the intermediate states into a sequence of sub-states; and,
executing each of the extended workflows concurrently in association with a corresponding one of the instances of the business object of the single business object type within the common host computing platform.

**2.** The method of claim 1, wherein a change from one of the sub-states to another of the sub-states is determined in response to a directive to persist an existing form of the corresponding one of the instances of the business object of the single business object type with a proposed form of the corresponding one of the instances, and a detection of a difference between the existing form of the corresponding one of the instances and the proposed form of the corresponding one of the instances.

**3.** The method of claim 2, wherein a controller in a data access layer of the common host computing platform receives the directive and in response performs a comparison of the existing form and the proposed form in order to detect the difference.

**4.** The method of claim 1, wherein at one of the intermediate states in transition to another of the intermediate states, associated logic executes upon completing the transition.

**5.** The method of claim 1, wherein the associated logic publishes data to a data layer upon arriving at a new one of the intermediate states.

**6.** A data processing system adapted for extensible state-based workflow management, the system comprising:
a host computing platform comprising one or more computers, each with memory and one or processing units including one or more processing cores; and,
a workflow extensibility management module comprising computer program instructions enabled while executing in the memory of at least one of the processing units of the host computing platform to perform:
defining a base workflow for a single business object type, the base workflow comprising a multiplicity of event handlers, each of the event handlers responding to a canonicalized form of an input document with a canonicalized form of an output document, the base workflow specifying an initial state, a final state and one or more intermediate states;
augmenting the base workflow into multiple different extended workflows, each augmentation extending the base workflow differently for different instances of a business object of the single business object type, the instances concurrently executing in a common host computing platform, each extended workflow incorporating an expansion of one of the intermediate states into a sequence of sub-states; and,
executing each of the extended workflows concurrently in association with a corresponding one of the instances of the single business object within the common host computing platform.

**7.** The system of claim 6, wherein a change from one of the sub-states to another of the sub-states is determined in response to a directive to persist an existing form of the corresponding one of the instances with a proposed form of the corresponding one of the instances, and a detection of a difference between the existing form and the proposed form of the single business object.

**9.** The system of claim 7, wherein a controller in a data access layer of the common host computing platform receives the directive and in response performs a comparison of the existing form and the proposed form in order to detect the difference.

**10.** The system of claim 6, wherein at one of the intermediate states in transition to another of the intermediate states, associated logic executes upon completing the transition.

**11.** The system of claim 6, wherein associated logic published data to a data layer upon arriving at a new one of the intermediate states.

**12.** A computing device comprising a non-transitory computer readable storage medium having program instructions stored therein, the instructions being executable by at least one processing core of a processing unit to cause the processing unit to perform a method for extensible state-based workflow management, the method including:
defining a base workflow for a single business object type, the base workflow comprising a multiplicity of event handlers, each of the event handlers responding to a canonicalized form of an input document with a canonicalized form of an output document, the base workflow specifying an initial state, a final state and one or more intermediate states;
augmenting the base workflow into multiple different extended workflows, each augmentation extending the base workflow differently for different instances of a business object of the single business object type, the instances of the business object concurrently executing in a common host computing platform, each extended workflow incorporating an expansion of one of the intermediate states into a sequence of sub-states; and,
executing each of the extended workflows concurrently in association with a corresponding one of the instances of the business object within the common host computing platform.

**13.** The device of claim 12, wherein a change from one of the sub-states to another of the sub-states is determined in response to a directive to persist an existing form the corresponding one of the instances with a proposed form of the corresponding one of the instances of the business object, and a detection of a difference between the existing form and the proposed form.

**14.** The device of claim 13, wherein a controller in a data access layer of the common host computing platform receives the directive and in response performs a comparison of the existing form and the proposed form in order to detect the difference.

**15.** The device of claim 12, wherein at one of the intermediate states in transition to another of the intermediate states, associated logic executes upon completing the transition.
